# EUROPEAN PATENT APPLICATION

(11) **EP 1 903 365 A1**
(43) Date of publication of application: **26.03.2008**
(21) Application number: 07018718.2
(22) Date of filing: 24.09.2007
(51) Int. Cl.: G02B 7/10

(54) **Lens driving device and imaging device using the same**

(30) Priority: 22.09.2006 JP 2006257861
(71) Applicant: Tamron Co., Ltd., Saitama-shi, Saitama-ken (JP)
(72) Inventor: Kakuta, Yoshio, Saitama-shi Saitama (JP)
(74) Representative: Bohmann, Armin K.

(57) **Abstract**

There is provided a lens driving device which can be miniaturized and an imaging device using the same. In the lens driving device of a cellular phone, a first lead screw and three gears forming a first driving mechanism are arranged along the optical-axis orthogonal reference-plane. A second lead screw and three gears forming a second driving mechanism are arranged along the optical-axis orthogonal reference-plane. A first motor is arranged along the optical-axis orthogonal reference-plane on one side of the first driving mechanism. A second motor is arranged along the optical-axis orthogonal reference-plane on one side of the second driving mechanism and opposes to the first motor with the optical-axis orthogonal reference-line interposed therebetween.

## Description

### BACKGROUND OF THE INVENTION

### Field of the Invention

The present invention relates to a small and light lens driving device, and particularly to a lens driving device for separately driving two lens groups and an imaging device using the same.

### Description of the Related Art

Hitherto, there has been generally used a method of moving two lens groups (a first and a second lens group) in an optical axis direction for most variable power optical systems of a digital camera. The two lens groups are held by a first and a second lens group holding frame respectively. The first and the second lens group holding frame are arranged to be moved along an optical axis by guiding members provided on a housing.

A lens driving device is used to separately drive the first and the second lens group holding frame. Specifically, the lens driving device is composed of a first and a second driving means. The first driving means drives the first lens group holding frame. The second driving means drives the second lens group holding frame. The first and the second driving means each include a drive source and driving mechanism. The driving mechanism drives its corresponding lens group holding frame using the drive force output from the drive source.

Such a lens driving device has been proposed in the following patent documents: for example, Japanese Patent Laid-Open No. 2005-17782; Japanese Patent Laid-Open No. H08-292358; and Japanese Patent Laid-Open No. 2006-64838. A first and a second driving means in the lens driving device described in the patent documents are arranged series on one side of a lens group holding frame driven range along an optical axis direction. Where, "the lens group holding frame driven range" is an area where the first and the second lens group holding frame are driven. The drive source and driving mechanism of the first and the second driving means are coupled to each other along an optical axis direction. For this reason, conventional lens driving device has a problem in that the length in an optical axis direction is excessively long.

To solve the above problem, a lens driving device has been proposed in the following patent documents: Japanese Patent Laid-Open No. H08-271777; Japanese Patent Laid-Open No. 2002-131611; and Japanese Patent Laid-Open No. 2006-154373. A first and a second driving means in the lens driving device described in the Japanese Patent Laid-Open No. H08-271777 and Japanese Patent Laid-Open No. 2002-131611 are arranged parallel on one side of the lens group holding frame driven range with orthogonal to an optical axis direction. This enables the length of an optical axis direction to be shortened by the length of one of the driving means as compared with the length in an optical axis direction in the lens driving device described in the Japanese Patent Laid-Open No. 2005-17782, Japanese Patent Laid-Open No. H08-292358, and Japanese Patent Laid-Open No. 2006-64838.

In the lens driving device described in Japanese Patent Laid-Open No. 2006-154373, a drive source and driving mechanism are juxtaposed in the direction in which the ends thereof are orthogonal to an optical axis and coupled to each other through a gear. This enables the length in an optical axis direction to be shortened by the length of both driving mechanisms as compared with the length in an optical axis direction in the lens driving device described in the Japanese Patent Laid-Open No. 2005-17782, Japanese Patent Laid-Open No. H08-292358, and Japanese Patent Laid-Open No. 2006-64838.

However, the lens driving devices described in Japanese Patent Laid-Open No. H08-271777, Japanese Patent Laid-Open No. 2002-131611, and Japanese Patent Laid-Open No. 2006-154373 have the following problem. In the lens driving devices described in Japanese Patent Laid-Open No. H08-271777 and Japanese Patent Laid-Open No. 2002-131611, the drive source and driving mechanism are directly coupled to each other in an optical axis direction. For this reason, in the lens driving devices, the length in an optical axis direction cannot be sufficiently shortened.

On the other hand, in the lens driving device described in Japanese Patent Laid-Open No. 2006-154373, the drive source and driving mechanism are arranged parallel in the direction in which the ends thereof are orthogonal to an optical axis. Accordingly, this lens driving device has solved a problem arising in the lens driving device described in Japanese Patent Laid-Open No. H08-271777 and Japanese Patent Laid-Open No. 2002-131611. However, in this lens driving device, the first and the second driving means are arranged series on one side of the lens group holding frame driven range along the direction parallel with an optical axis. For this reason, in this lens driving device also, the length in the direction parallel with an optical axis cannot be sufficiently shortened. Accordingly, any other conventional lens driving devices cannot be miniaturized.

The present invention has been made in view of these conventional problems and has for its purpose to provide a lens driving device contributing to downsizing and an imaging device using the same.

### SUMMARY OF THE INVENTION

The present inventors have employed the following lens driving device and imaging device using the same to solve the above problems as a result of study.

A lens driving device is provided by comprising: a first driving means for driving a first lens group holding frame arranged movable along the optical axis, the first driving means including a first drive source and a first driving mechanism for driving the first lens group holding frame by using a drive force output from the first drive source; and a second driving means for driving a second lens holding frame arranged movable along the optical axis, the second driving means including a second drive source and a second driving mechanism for driving the second lens group holding frame by using a drive force output from the second drive source; wherein the first and the second driving mechanism are arranged on one side of a lens group holding frame driven range that the first and the second lens group holding frame are driven and along the optical-axis orthogonal reference-plane which is orthogonal to the optical axis on the one side, and the first and the second drive source are arranged along the optical-axis orthogonal reference-plane on one side of the arranged first and the second driving mechanism respectively and facing each other with the optical-axis orthogonal reference-line interposed therebetween which is orthogonal to the optical axis on the one side. Preferably the lens driving device comprises:
a first driving means for driving a first lens group holding frame arranged movable along the optical axis, the first driving means including a first drive source and a first driving mechanism for driving the first lens group holding frame by using a drive force output from the first drive source; and
a second driving means for driving a second lens holding frame arranged movable along the optical axis, the second driving means including a second drive source and a second driving mechanism for driving the second lens group holding frame by using a drive force output from the second drive source; wherein
the first and the second driving mechanism are arranged on one side of a lens group holding frame driven range that the first and the second lens group holding frame are driven, and the first and the second driving mechanism are arranged along the optical-axis orthogonal reference-plane which is orthogonal to the optical axis on the one side, and the first and the second drive sources are respectively arranged on one side of the first and the second driving mechanism, and along the optical-axis orthogonal reference-plane, and the first and the second driving sources are facing each other with interposing the optical-axis orthogonal reference-line which is orthogonal to the optical axis on one side.

In such a structure, the driving mechanisms and the drive sources of the driving means are arranged along the orthogonal to the optical axis direction. Accordingly, the lens driving device according to the present invention is short for the optical axis direction against to a conventional lens driving device.

Expressions used in the present invention are described below. First, "lens group holding frame driven range" refers to a cylindrical area where the first and the second lens group holding frame are driven along the optical axis. Next, "one side of the lens group holding frame driven range" refers to one side around the circumference of the lens group holding frame driven range. In other words, "one side of the lens group holding frame driven range" refers to one end side of the lens group holding frame driven range for orthogonal to the optical axis direction.

The expression the driving mechanism and the drive source "are arranged along the optical-axis orthogonal reference-plane" merely means that the driving mechanism and the drive source are arranged along the optical-axis orthogonal reference-plane and coupled to each other. In other words, the driving mechanism and the drive source are arranged at a position where both of them can be coupled to each other along the optical-axis orthogonal reference-plane. In the present invention, however, it is also not limited that the direction of the driving mechanism and drive source themselves are to be arranged along the optical-axis orthogonal reference-plane.

With respect to the expression "both the drive sources are arranged facing each other with the optical-axis orthogonal reference-line interposed therebetween", both the drive sources may be arranged facing each other with the optical-axis orthogonal reference-line interposed therebetween, regardless of the structure of the drive source and in whatever method. For instance, both the drive sources in their entireties may be arranged facing each other with the optical-axis orthogonal reference-line interposed therebetween, or the component parts of both the drive sources may be arranged facing each other with the optical-axis orthogonal reference-line interposed therebetween.

The lens driving device according to the present invention is characterized in that the first and the second drive source each includes the main body of the drive source and drive shaft provided on the main body of both the drive sources, and the main bodies of both the drive sources are arranged facing each other with the optical-axis orthogonal reference-line interposed therebetween.

Such a structure makes space smaller between both the drive sources than a structure that the drive shafts of both the drive sources are arranged facing each other with the optical-axis orthogonal reference-line interposed therebetween.

The lens driving device according to the present invention is characterized in that the drive shafts of the first and the second drive source are arranged parallel with each other.

Such a structure makes it possible to be adjacent more easily both the main bodies of the drive sources to each other, and both the driving mechanisms to be simplified against to the case the drive shafts of both the drive sources are not arranged parallel with each other.

The lens driving device according to the present invention is characterized in that the main bodies of the first and the second drive sources are arranged adjacent to each other, preferably more adjacent to each other. It will be understood by the persons skilled in the art that such arrangement is performed in a way so as to arrange the main bodies of the first and the second drive source as close as possible to each other.

Such a structure makes space smaller between both the drive sources than a structure that both the main bodies of the drive sources are not arranged adjacent to each other.

The lens driving device according to the present invention is characterized in such that the first and the second driving mechanism each includes a lead screw which is arranged parallel with the optical axis on the side of the lens group holding frame driven range, and a power transmission means which is formed of a plurality of gears, one side of which is coupled to one end side of the lead screw, and the first and the second drive source each includes a motor, and the drive shaft of each motor is arranged parallel with the optical axis at one end side of the corresponding lead screw, and the other side of the power transmission means which is formed of a plurality of gears is coupled to the drive shaft of the motor.

In such a structure, the driving mechanisms and the motors of both the driving means are arranged along the orthogonal to the optical axis direction. Therefore, the lens driving device according to the present invention makes it short for the optical axis direction against to a conventional lens drive.

The lens driving device according to the present invention is characterized in such that the plurality of gears of the first and the second driving means are arranged parallel with the optical-axis orthogonal reference-plane and diagonal to the optical-axis orthogonal reference-line.

The lens driving device of such a structure makes it far short for orthogonal to the optical axis direction against to a lens driving device of which both the plurality of gears are arranged parallel with the optical-axis orthogonal reference-line.

Furthermore, the lens driving device according to the present invention is characterized in such that the plurality of gears of the first and the second driving means are arranged to intersect with each other.

Such a structure makes it far short for orthogonal to the optical axis direction against to a lens driving device which is comprised such that the plurality of gears of the driving means are arranged not to intersect with each other.

The lens driving device according to the present invention is characterized in such that the drive shafts of the motors of the first and the second driving means are arranged toward the object side and the imaging side respectively and each of the power transmission means formed of the plurality of the gears is arranged on the object side and the imaging side.

Such a structure makes it smooth for workers to assemble each of the plurality of gears.

The lens driving device according to the present invention is characterized in such that the input terminals of the first and the second drive source are provided in same direction.

In such a structure, workers can connect components to the drive sources on the same side.

The lens driving device of the present invention is characterized in such that the first and the second drive source use the same drive source and the first and the second first driving mechanism use the same driving mechanism.

Such a structure enables furthermore to decrease the type of component of the lens driving drive.

The lens driving device according to the present invention is characterized in such that the first and the second driving means are constructed to be assembled in one housing, and the first and the second lens group holding frame are removable from the housing with the first and the second driving means are assembled to.

Such a structure makes it possible for workers to assemble the lens driving device to or detach it from the lens group holding frames as one body.

The imaging device of the present invention is characterized by comprising the lens driving device according to the present invention.

Such a structure makes it far short for the optical axis direction of the imaging device against to it comprising a conventional lens driving device.

In the lens driving device according to the present invention, the driving mechanisms and the drive sources of the first and the second driving means are arranged along orthogonal to the optical axis direction. Therefore, the lens driving device according to the present invention makes short for the optical axis direction against to a conventional lens driving device. This enables the lens driving device according to the present invention to be miniaturized.

Further, in the lens driving device according to the present invention, the first and the second drive source are facing each other with the optical-axis orthogonal reference-line which is interposed therebetween. Accordingly, the lens driving device according to the present invention may make far short for orthogonal to the optical axis direction against to a lens driving device in which both the drive sources are not opposed to each other with the optical-axis orthogonal reference-line interposed therebetween. Furthermore, in the lens driving device according to the present invention, the first and the second driving mechanism are arranged on the side of the lens group holding frame driven range. This enables the structure of the driving mechanisms simple, so that the size of both the driving mechanisms are miniaturized. Consequently, the lens driving device according to the present invention is allowed to be further miniaturized.

According to the lens driving device of the present invention, the first and the second drive source each includes the main body of the drive source and drive shaft, and both the main bodies of the drive sources are arranged facing each other with the optical-axis orthogonal reference-line which is interposed therebetween. Therefore, lens driving device according to the present invention makes short the distance between both the drive sources against to the case the drive shafts of both the drive sources are arranged facing each other with the optical-axis orthogonal reference-line interposed therebetween. Consequently, the lens driving device according to the present invention is allowed to be further miniaturized.

The lens driving device according to the present invention, the drive shafts of the first and second drive sources are arranged parallel to each other. Therefore, the lens driving device according to the present invention can easily make the main bodies of both the drive sources more adjacent each other against to the case the drive shafts of both the drive sources are not arranged parallel with each other. In addition, in the lens driving device according to the present invention enables the structure of both the driving mechanisms to be simplified against to the case the drive shafts of both the drive sources are not arranged parallel with each other, so that the lens driving device according to the present invention, both the driving mechanisms may be further miniaturized.

Furthermore, the lens driving device according to the present invention, the main bodies of both the drive sources lie adjacent to each other. Therefore, the distance between both the drive sources are far short against to the case the main bodies of both the drive sources are not adjacent. Therefore, the lens driving device according to the present invention is allowed to be further miniaturized.

Furthermore, by applying the lens driving device according to the present invention, each of the first and the second driving means is formed of a motor, lead screw and power transmission means consisted of a plurality of gears. Therefore, the lens driving device according to the present invention makes short for the optical axis direction against to a conventional lens driving device. This enables the lens driving device according to the present invention to be further miniaturized.

Still furthermore, by applying the lens driving device 6 according to the present invention, the plurality of gears of the first and the second driving mechanism are arranged diagonal. Therefore, the lens driving device according to the present invention makes short for orthogonal to the optical axis direction. This enables the lens driving device according to the present invention to be further miniaturized.

Moreover, by applying the lens driving device according to the present invention, the plurality of gears of the first and the second driving mechanism are arranged to intersect with each other. Therefore, this enables the lens driving device far short for orthogonal to the optical axis direction. As a result, the lens driving device according to the present invention is allowed to be further miniaturized.

In the lens driving device of the present invention, the drive shafts of the motors of the first and the second driving means are respectively arranged toward the object side and the imaging side. The power transmission means are also respectively arranged toward the object side and the imaging side. Accordingly, this enables smooth for workers to arrange both the plurality of gears when the lens driving device is assembled. Therefore, the lens driving device according to the present invention may improve efficiency of assembly.

By applying the lens driving device according to the present invention, the input terminals of the first and the second drive sources are provided with same direction. Accordingly, workers can connect components to the first and the second drive source on the same side. Consequently, the lens driving device according to the present invention may improve efficiency of assembly.

Furthermore, by applying the lens driving device according to the present invention, the first and the second drive sources and the first and the second driving mechanisms use the same drive source and the same driving mechanism respectively. This enables the type of the component parts of the lens driving device to be reduced, thereby costs may be cut and the size of the lens driving device may be miniaturized.

In the lens driving device according to the present invention, both the driving means are attached to one housing. Thereby, workers can assemble the lens driving device to the lens group holding frames or take it apart from as one body. Therefore, by applying the lens driving device according to the present invention, the efficiency of attaching the lens driving device to the lens group holding frames or taking it apart from can be greatly improved.

The imaging device according to the present invention is equipped with the lens driving device according to the present invention. Therefore, the imaging device according to the present invention may be short for the optical axis direction against to an imaging device which includes a conventional lens driving device. Accordingly, the imaging device according to the present invention can be miniaturized. Moreover, the imaging device according to the present invention can obtain other advantages of the lens driving device according to the present invention.

### BRIEF DESCRIPTION OF THE DRAWINGS

FIG. 1 is a view showing appearance of a cellular phone illustrating one embodiment of the present invention;
FIG. 2 is a perspective view of a lens unit illustrating the embodiment;
FIG. 3 is a perspective view illustrating a relationship between the main body of a lens driving device and a first lens group holding frame in the embodiment;
FIG. 4 is a perspective view illustrating a relationship between the main body of the lens driving device and a second lens group holding frame in the embodiment;
FIG. 5 is a schematic view illustrating a positional relationship between constituent members of the main body of the lens driving device in the embodiment;
FIG. 6 is a perspective view of the main body of the lens driving device mounted on the housing when viewed from one side in the embodiment; and
FIG. 7 is a perspective view of the main body of the lens driving device mounted on the housing when viewed from the other side in the embodiment.

### DETAILED DESCRIPTION OF THE PREFERRED EMBODIMENTS

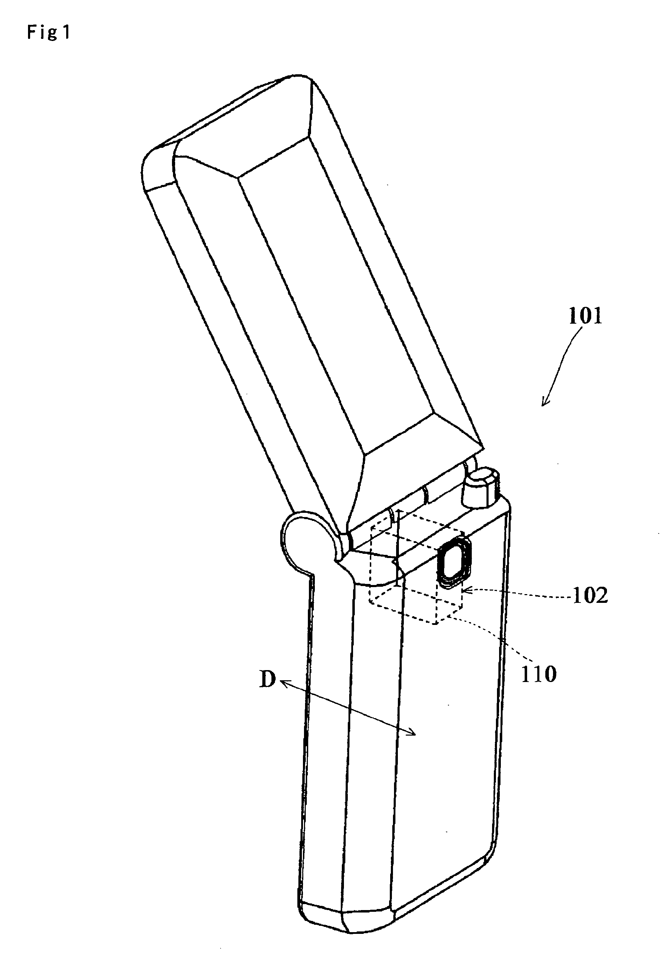

The embodiment of the present invention is described below with reference to the drawings. FIG. 1 shows the appearance of a cellular phone 101 illustrating one embodiment of the present invention. The cellular phone 101 has a camera function. The cellular phone 101 has a camera unit 102. The camera unit 102 includes a case 110 formed in a box shape, a lens unit disposed in the case 110 and an image pickup device (CCD). The camera module 102 consists of the image pickup device to pick up light reflected from an object according to user's operation, converts it into an electric signal and drives the electric signal to an A/D converter, and the like.

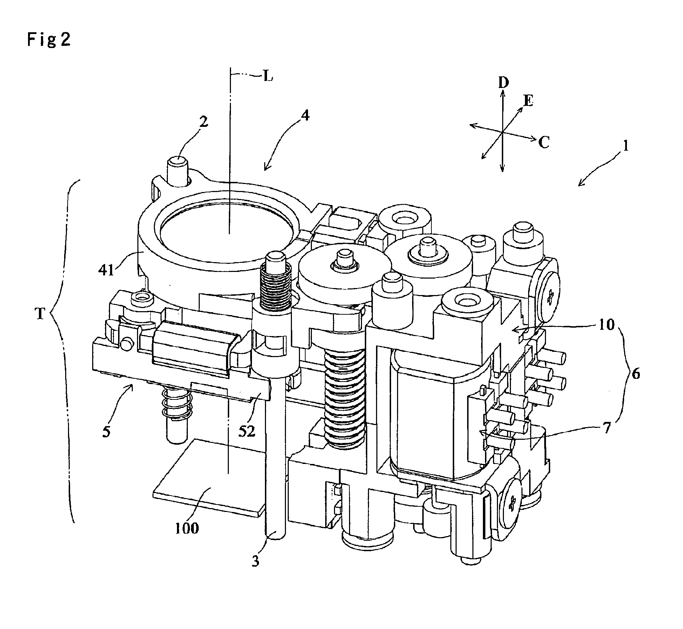

FIG. 2 is a perspective view of the lens unit 1. The lens unit 1 includes a first guide pole 2, second guide pole 3, first lens group holding member 4, second lens group holding member 5 and lens driving device 6.

The guide poles 2 and 3 are guide members for guiding the first lens group holding members 4 and the second lens group holding members 5 along the optical axis L. The guide poles 2 and 3 are formed in the shape of a thin round bar. The guide poles 2 and 3 are arranged parallel with the optical axis L at predetermined spaced intervals.

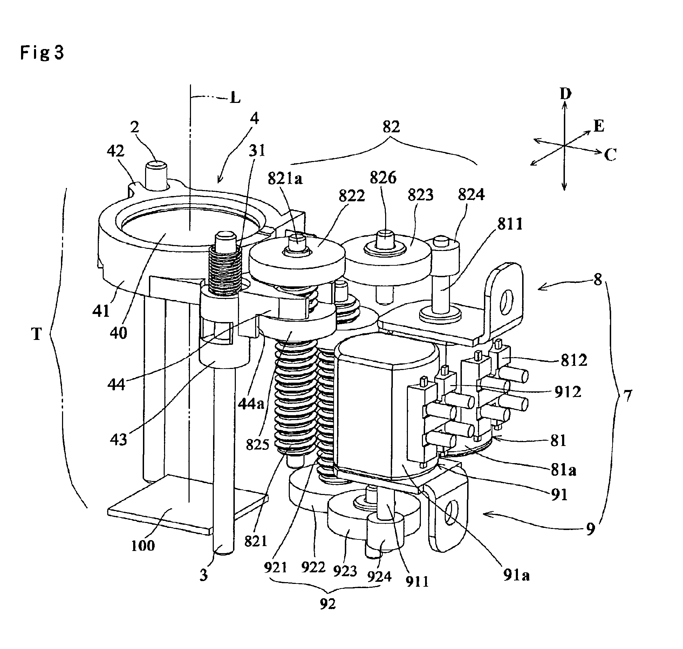

The first lens group holding member 4 is driven along the optical axis L with being guided by the guide poles 2 and 3. As illustrated also in FIG. 3, the first lens group holding member 4 is arranged on the object side. The first lens group holding member 4 includes a first lens group holding frame 41, first guide portion 42, second guide portion 43 and third guide portion 44.

The first lens group holding frame 41 shapes annular. A first lens group 40 is held inside the first lens group holding frame 41.

The first guide portion 42 is provided on the side of the first guide pole 2 on the circumferential face of the first lens group holding frame 41. The first guide portion 42 is formed in the U shape. The first guide pole 2 is supported inside the first guide portion 42.

The second guide portion 43 is provided on the side of the second guide pole 3 on the circumferential face of the first lens group holding frame 41. The second guide portion 43 is cylindrical. The second guide pole 3 is inserted into the inside of the second guide portion 43.

The second guide pole 3 is inserted into a spring 31 on the object side of the second guide portion 43. The spring 31 always urges the first lens group holding member 4 to the imaging side.

The third guide portion 44 is provided on the side of lens driving device 6 on the circumferential face of the first lens group holding frame 41. The third guide portion 44 is in the U shape. A mechanical stopper portion 44a is provided on the imaging side of the third guide portion 44.

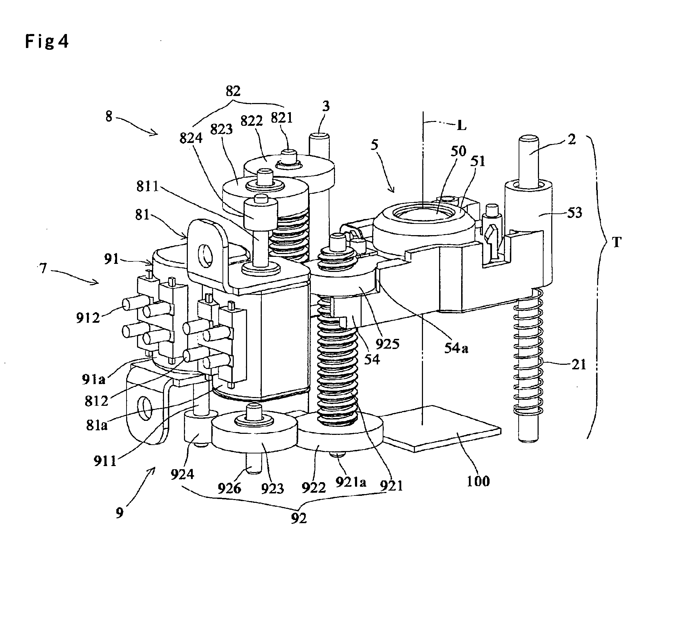

As illustrated in FIGS. 2 and FIGS. 4, the second lens group holding member 5 is driven along the optical axis L while guided by the guide poles 2 and 3. The second lens group holding member 5 is arranged on the imaging side (on the side of an image pickup device 100). The second lens group holding member 5 includes a second lens group holding frame 51, first guide portion 52, second guide portion 53 and third guide portion 54.

The second lens group holding frame 51 is annular. A second lens group 50 is held inside the second lens group holding frame 51.

As illustrated in FIG. 2, the first guide portion 52 is provided on the side of the second guide pole 3 on the circumferential face of the second lens group holding frame 51. The first guide portion 52 is in the U shape. The second guide pole 3 is supported inside the first guide portion 52.

As illustrated in FIG. 4, the second guide portion 53 is provided on the side of the first guide pole 2 on the circumferential face of the second lens group holding frame 51. The second guide portion 53 is cylindrical. The first guide pole 2 is inserted into the inside of the second guide portion 53.

The first guide pole 2 is inserted into a spring 21 on the imaging side of the second guide portion 53. The spring 21 always urges the second lens group holding member 5 to the object side.

The third guide portion 54 is provided on the side of lens driving device 6 on the circumferential face of the second lens group holding frame 51. The third guide portion 54 is in the U shape. A clamp portion 54a is provided on the object side of the third guide portion 54.

On the other hand, the lens driving device 6 drives the first and the second lens group holding frame 41 and 51 respectively. As illustrated in FIG. 2, the lens driving device 6 is arranged on one side of a lens group holding frame driven range T. The lens group holding frame driven range T is a cylindrical area where the first and the second lens group holding frame 41 and 51 are driven along the optical axis L. The lens driving device 6 includes a main body 7 of the lens driving device and a housing 10. As illustrated in FIG. 3, the main body 7 of the lens driving device is composed of a first and a second driving means 8 and 9.

The first driving means 8 drives the first lens group holding frame 41. The first driving means 8 is equipped with a first motor 81 and a first driving mechanism 82.

The first driving mechanism 82 drives the first lens group holding frame 41 by making use of a drive force output from the first motor 81. The first driving mechanism 82 is arranged on one side of the lens group holding frame driven range T.

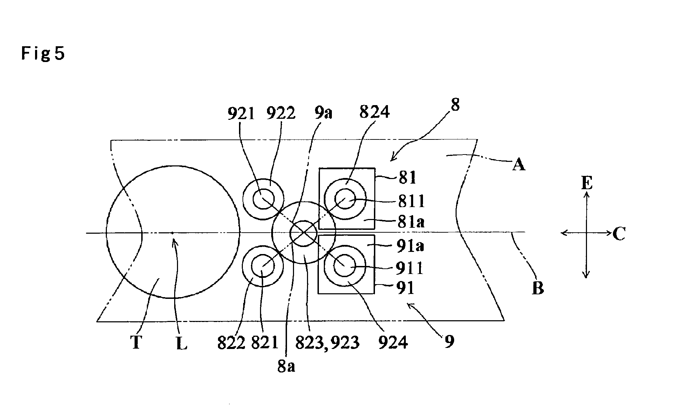

The first driving mechanism 82 consists of a first lead screw 821, first gear 822, second gear 823 and third gear 824. These components are arranged along the optical-axis orthogonal reference-plane A illustrated in FIG. 5. The optical-axis orthogonal reference-plane A is a plane orthogonal to the optical axis L on one side of the lens group holding frame driven range T.

As illustrated in FIG. 3, the first lead screw 821 is arranged parallel with the optical axis L on one side of the lens group holding frame driven range T. The first lead screw 821 is held by third guide portion 44 of the first lens group holding member 4. The first lead screw 821 is screwed into a first carriage 825 on the imaging side of the third guide portion 44. The circumference of the first carriage 825 is held by the clamp portion 44a of the third guide portion 44. The first carriage 825 does not rotate by the function of the clamp portion 44a.

The three gears 822 to 824 are arranged on the object side. As illustrated in FIG. 5, the three gears 822 to 824 form a power transmission means 8a. The power transmission means 8a transmits drive force generated by the motor 81 to the lead screw 821. The three gears 822 to 824 are arranged parallel with the optical-axis orthogonal reference-plane A and diagonal to the optical-axis orthogonal reference-line B.

As illustrated in FIG. 3, the first gear 822 is attached to one side 821a of the first lead screw 821 on its object side. The other side of the second gear 823 is coupled to one side of the first gear 822. The second gear 823 is rotatably supported with a second gear supporting shaft 826. The other side of the third gear 824 is coupled to one side of the second gear 823.

On the other hand, as illustrated in FIG. 5, the first motor 81 is arranged along the optical-axis orthogonal reference-plane A on one side of the first driving mechanism 82. The first motor 81 is provided with a first motor main body 81a and drive shaft 811. The drive shaft 811 is arranged on the first motor main body 81a toward the object side in parallel with the optical axis L. The third gear 824 is attached to the drive shaft 811. An input terminal 812 is provided on one side face of the first motor main body 81a.

A method of driving the first lens group holding frame 41 by the first driving means is described below. The first motor 81 is turned on to rotate its drive shaft 811 to generate a drive force. The drive force is transmitted from the drive shaft 811 to the third gear 824, second gear 823, first gear 822 and first lead screw 821 in this order.

The first lead screw 821 is rotated using the transmitted drive force. The first carriage 825 moves along the first lead screw 821 as the first lead screw 821 is rotated because the first carriage 825 held by the clamp portion 44a. At the same time, the third guide portion 44 of the first lens group holding member 4 moves along the first lead screw 821. The first guide portion 42 and the second guide portion 43 which is guided for guide pole 2 and guide pole 3 are moved by the movement of the third guide portion 44 and the first carriage 825, thereby the first lens group holding frame 41 is moved along the optical axis L.

On the other hand, as illustrated in FIG. 4, the second driving means 9 drives the second lens group holing frame 51. The second driving means 9 is equipped with the second motor 91 and the second driving mechanism 92.

The second driving mechanism 92 moves the second lens group holding frame 51 by making use of a drive force output from the second motor 91. The second driving mechanism 92 is arranged on one side of the lens group holding frame driven range T as is the case with the first driving mechanism 82.

The second driving mechanism 92 consists of the second lead screw 921, the fourth gear 922, the fifth gear 923 and the sixth gear 924. These components are arranged along the optical-axis orthogonal reference-plane A as illustrated in FIG. 5. The components in which used are the same as those (the first lead screw 821 and three gears 822 to 824) which forms the first driving mechanism 82.

As illustrated in FIG. 4, the second lead screw 921 is arranged parallel with the optical axis L on one side of the lens group holding frame driven range T. The second lead screw 921 is held by third guide portion 54 of the second lens group holding member 5. The second lead screw 921 is screwed into a second carriage 925 on the object side of the third guide portion 54. The circumference of the second carriage 925 is held by the clamp portion 54a of the third guide portion 54. Therefore, the second carriage 925 does not rotate by the function of the clamp portion 54a.

The three gears 922 to 924 are arranged on the imaging side. As illustrated in FIG. 5, the three gears 922 to 924 form a power transmission means 9a. The power transmission means 9a transmits drive force generated by the motor 91 to the second lead screw 921. The three gears 922 to 924 are arranged parallel with the optical-axis orthogonal reference-plane A and diagonal to the optical-axis orthogonal reference-line B. In addition, the three gears 922 to 924 are arranged to intersect the three gears 822 to 824 of the first driving mechanism 82.

As illustrated in FIG. 4, the fourth gear 922 is attached to one side 921a of the second lead screw 921 on its imaging side. The other side of the fifth gear 923 is coupled to one side of the fourth gear 922. The fifth gear 923 is rotatably supported with a fifth gear supporting shaft 926. The other side of the sixth gear 924 is coupled to one side of the fifth gear 923.

On the other hand, as illustrated in FIG. 5, the second motor 91 is arranged along the optical-axis orthogonal reference-plane A on one side of the second driving mechanism 92. The second motor 91 used is the same as the first motor 81. The second motor 91 consists of a second motor main body 91a and drive shaft 911.

The second motor main body 91a is arranged opposite to the first motor main body 81a with the optical-axis orthogonal reference-line B which is interposed therebetween. The optical-axis orthogonal reference-line B is a line orthogonal to the optical axis L on one side of the first driving mechanism 82 and the second driving mechanism 92, i.e., on one side of the lens group holding frame driven range T. Furthermore, the second motor main body 91a is adjacent to the first motor main body 81a.

As illustrated in FIG. 3 and FIG. 4, the drive shaft 911 of the second motor 91 is provided on the second motor main body 91a with parallel to the optical axis L on the imaging side. The sixth gear 924 is attached to the drive shaft 911. An input terminal 912 is provided on one side of the second motor main body 91a.

A method of driving the second lens group holding frame 51 by the second driving means is described below. The second motor 91 is turned on to rotate its drive shaft 911 to generate a drive force. The drive force is transmitted from the drive shaft 911 to the sixth gear 924, fifth gear 923, fourth gear 922 and second lead screw 921 in this order.

The second lead screw 921 is rotated by making use of the transmitted drive force. This rotation enables the second carriage 925 held by the mechanical stopper portion 54a to be moved along the second lead screw 921. At the same time, the third guide portion 54 of the second lens group holding member 5 moves along the second lead screw 921. The first guide portion 52 and the second guide portion 53 which is guided for the guide pole 2 and guide pole3 are moved by the movement of the third guide portion 54 and the second carriage 925, thereby the second lens group holding frame 51 is moved along the optical axis L.

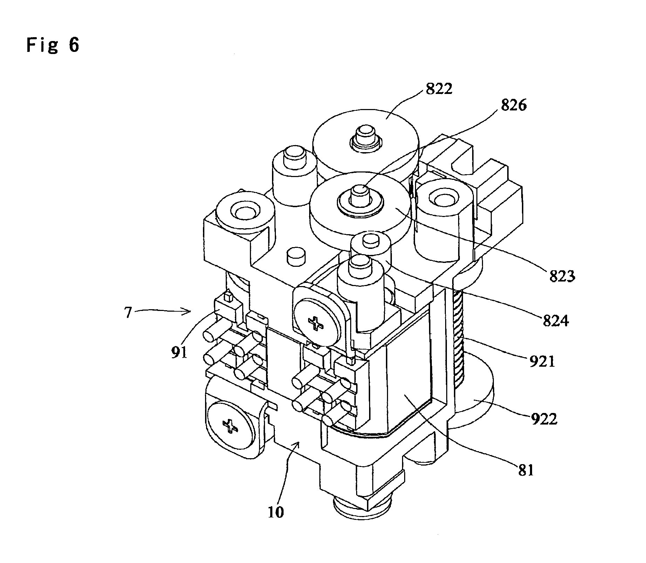

As illustrated in FIG. 6, on the other hand, a housing 10 is a member to which the main body 7 of the lens driving device is attached. A first and a second motor housing portion 11 and 12 are provided on one side of the housing 10 facing each other. The first motor 81 is housed in and attached to the first motor housing portion 11. The second motor 91 is housed in and attached to the second motor housing portion 12.

The second gear supporting shaft 826 is supported on the object side at the center portion of the housing 10. The fifth gear supporting shaft 926 (not shown in FIG. 6, but refer to FIG. 4) is supported on the imaging side at the center portion of the housing 10.

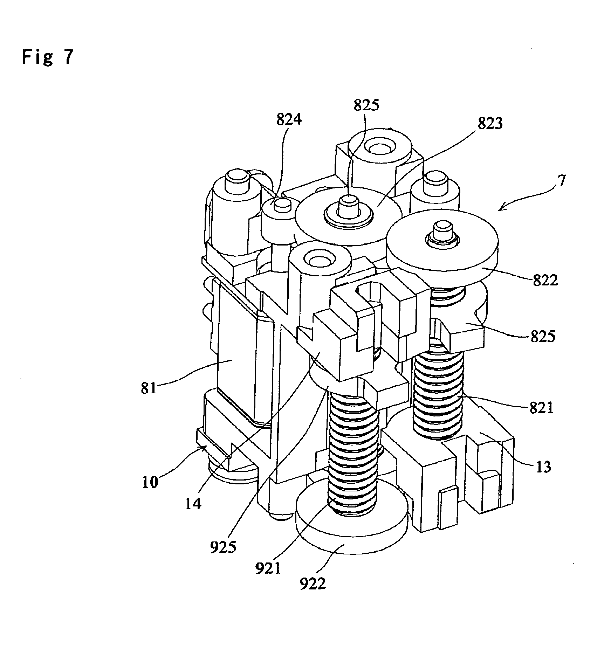

As illustrated in FIG. 7, on the other hand, a first lead screw attachment portion 13 and a second lead screw attachment portion 14 are provided on the other side of the housing 10 facing each other. The first lead screw 821 is attached to the first lead screw attachment portion 13. The second lead screw 921 is attached to the second lead screw attachment portion 14.

The main body 7 of the lens driving device is attached to the housing 10 by the carriages 825 and 925 and a plurality of gears 822 to 824 and 922 to 924 are attached to corresponding members respectively. The lens driving device 6 is attachable to and detachable from lens group frame 41 and lens group frame 51 by the carriages 825 and 925 are held by the corresponding guide portion 44 and guide portion 54 (refer to FIGS. 3 and FIGS. 4) respectively or disengaged from the corresponding guide portion 44 and guide portion 54 respectively.

In such a configuration of the lens driving device 6 of the present embodiment illustrated in FIG. 5, the first motor 81, the first driving mechanism 82, the second motor 91 and the second driving mechanism 92 are arranged along the optical-axis orthogonal reference-plane A. In other words, in the lens driving device 6 of the present embodiment, the members 81, 82, 91 and 92 forming the main body 7 of the lens driving device are arranged along the direction C (refer to FIGS. 3 and 5) orthogonal to the optical axis L. Accordingly, the lens driving device 6 of the present embodiment is short for the optical axis direction D (refer to FIG. 3) against to any other conventional lens driving devices. Therefore, the lens driving device 6 of the present embodiment can be miniaturized.

Furthermore, in the lens driving device 6 of the present embodiment, as illustrated in FIG. 5, both the motor main bodies 81a and 91a are opposite to each other with the optical-axis orthogonal reference-line B which is interposed therebetween. Accordingly, the lens driving device 6 of the present embodiment may be far short for the orthogonal to the optical axis L direction C against to the case both the motor main bodies 81a and 91a are not opposed to each other with the optical-axis orthogonal reference-line B interposed therebetween. In addition, the lens driving device 6 of the present embodiment is smaller in space between the motors 81 and 91 against to the case the drive shafts 811 and 911 of the motors 81a and 91a are not opposed to each other with the optical-axis orthogonal reference-line B interposed therebetween. Therefore, the lens driving device 6 of the present embodiment is allowed to be further miniaturized.

In the lens driving device 6 of the present embodiment, the drive shafts 811 and 911 of the motors 81 and 91 are arranged parallel to each other. Accordingly, in the lens driving device 6 of the present embodiment, the motor main bodies 81a and 91a are more easily allowed to be adjacent against to the case the drive shafts 811 and 911 of the motors 81 and 91 are not arranged parallel to each other. In the lens driving device 6 of the present embodiment, the driving mechanisms 82 and 92 can be simplified against to the case the drive shafts 811 and 911 of the motors 81 and 91 are not arranged parallel to each other. In the lens driving device 6 of the present embodiment, the power transmission means 8a and 9a can be particularly simplified in structure. This allows the driving mechanisms 82 and 92 to be miniaturized in the lens driving device 6 of the present embodiment, thereby enabling the lens driving device 6 of the present embodiment to be further miniaturized.

Furthermore, in the lens driving device 6 of the present embodiment, the motor main bodies 81a and 91a are to be further adjacent. Therefore, in the lens driving device 6 of the present embodiment the distance between the motors 81 and 91 becomes far small against to the case the motor main bodies 81a and 91a are not adjacent. This enables a further miniaturization of the lens driving device 6 of the present embodiment.

Still furthermore, in the lens driving device 6 of the present embodiment, the first and second driving mechanisms 82 and 92 are arranged on the side of the lens group holding frame driven range T. This simplifies the struction of the driving mechanisms 82 and 92 to reduce the driving mechanisms 82 and 92 in size. Consequently, the lens driving device 6 of the present embodiment is allowed to be further miniaturized.

Still furthermore, in the lens driving device 6 of the present embodiment, as illustrated in FIG. 5, a plurality of gears 822 to 824 of the first driving mechanism 82 and a plurality of gears 922 to 924 of the second driving mechanism 92 are arranged diagonal to the optical-axis orthogonal reference-line B. Therefore, the lens driving device 6 of the present embodiment is short for orthogonal to the optical axis L direction C against to a lens driving device that both the plurality of gears are arranged straight. Therefore, the lens driving device 6 of the present embodiment can be further miniaturized.

Moreover, in the lens driving device 6 of the present embodiment, a plurality of gears 822 to 824 of the first driving mechanism 82 and a plurality of gears 922 to 924 of the second driving mechanism 92 are intersected with each other. Therefore, the lens driving device 6 of the present embodiment is far short for the orthogonal to the optical axis L direction C against to a lens driving device that both the plurality of gears are not intersected with each other. Therefore, the lens driving device 6 of the present embodiment is allowed to be further miniaturized.

Furthermore, in the lens driving device 6 of the present embodiment, the driving means 8 and 9 each consists of motors, lead screws and power transmission means composed of a plurality of gears. It enables for the lens driving device 6 to be reduced kinds of constituent members. As a result, costs of the lens driving device 6 of the present embodiment can be reduced and, the size of the lens driving device 6 of the present embodiment can be miniaturized. Incidentally, the number of a plurality of gears in the power transmission means is not limited in particular.

Still furthermore, in the lens driving device 6 of the present embodiment, the first and the second motor 81 and 91 each uses the same motor, and the first and the second driving mechanism 82 and 92 each uses the same components. It enables for the lens driving device 6 to be further reduced kinds of constituent members. As a result, costs of the lens driving device 6 of the present embodiment can be further reduced and, the size of the lens driving device 6 of the present embodiment can be miniaturized.

Still furthermore, in the lens driving device 6 of the present embodiment, the driving means 8 and 9 are comprised as same by consisting same components, and by being arranged symmetrical to each other at positions rotated by 180 degrees around the optical-axis orthogonal reference-line B. Consequently, the lens driving device 6 of the present embodiment improved efficiency of being assembled them, and is allowed to be further miniaturized against to the case both the driving means are not comprised as same.

In the lens driving device 6 of the present embodiment, as illustrated in FIGS. 3 and 4, the drive shaft 811 of the first motor 81 and the first power transmission means 8a are arranged toward the object side. The drive shaft 911 of the second motor 91 and the second power transmission means 9a are arranged toward the imaging side. Accordingly, in assembling the lens driving device 6, workers are able to arrange smoothly a plurality of gears 822 to 824 and 922 and 924 of the power transmission means 8 and 9 respectively. Therefore, in the lens driving device 6 of the present embodiment, efficiency of the assembling work may be improved. Incidentally, for example, the same effect can be obtained as the present embodiment even if the drive shaft 811 of the first motor 81 and the first power transmission means are arranged toward the imaging side and the drive shaft 911 of the second motor 91 and the second power transmission means are arranged toward the object side.

In the lens driving device 6 of the present embodiment, the first and the second driving mechanism 82 and 92 and the motors 81 and 91 are arranged facing each other with the optical-axis orthogonal reference-line B interposed therebetween. Furthermore, in the lens driving device 6 of the present embodiment, the power transmission means 8a and 9a of the first and the second driving mechanism 82 and 92 are arranged apart from each other along the optical axis direction D. This enables the following configuration in the lens driving device 6 of the present embodiment.

The driving means 8 and 9 are allowed to be arranged within the length in the optical axis direction D in the lens group holding frame driven range T. In addition, the driving means 8 and the driving means 9 are allowed to be substantially arranged within the length in the direction E (refer to FIGS. 3 and FIGS. 5) orthogonal to the optical axis L in the lens group holding frame driven range T. Therefore, the lens driving device 6 of the present embodiment may be further miniaturized. The direction E orthogonal to the optical axis L is a direction orthogonal to the optical-axis orthogonal reference-line B on the optical-axis orthogonal reference-plane A.

In the lens driving device 6 of the present embodiment, as illustrated in FIGS. 3 and FIGS. 4, the input terminal 812 of the first motor 81 and the input terminal 912 of the second motor 91 are provided in the same direction. Accordingly, when the lens driving device 6 is assembled, workers can connect to the motors 81 and 91 on the same side. Consequently, in the lens driving device 6 of the present embodiment, the assembling work may be further improved in efficiency.

In the lens driving device 6 of the present embodiment, the driving means 8 and 9 are attached to one housing 10. Thereby, when workers assemble or disassemble the lens unit 1, the lens driving device 6 can be attached to as one body or detached from the lens group holding frames 41 and 51 as one body. Therefore, in the lens driving device 6 of the present embodiment, the lens driving device 6 can be highly efficiently attached to or detached from the lens group holding frames 41 and 51.

As illustrated in FIG. 2, the housing 10 is formed such that lens driving device 6 in the entireties is arranged within the optical axis direction D and the the direction E orthogonal to the optical axis L in the lens group holding frame driven range T with the driving means 8 and 9 attached. Therefore, in the lens driving device 6 of the present embodiment, the lens driving device 6 may be efficiently attached to or detached from the lens group holding frames 41 and 51 and further miniaturized.

In the lens driving device 6 of the present embodiment, although a description has been made of a case in which the lens driving device 6 was used for two lens group holding frames 41 and 51, the lens driving device 6 of the present embodiment may be used for even-numbered lens group holding frames. For four lens group holding frames, for instance, two lens driving devices 6 are arranged on the opposite sides with the lens group holding frame driven range interposed therebetween, thereby providing the same effect as that in the present embodiment.

As illustrated in FIG. 1, using the lens driving device 6 of the present embodiment allows the length in the optical axis direction D to be shortened in the camera unit 102. This enables the camera unit 102 to be miniaturized. The cellular phone 101 of the present embodiment is provided with the camera unit 102 to permit the cellular phone 101 to be shorter in length in the optical axis direction D than a cellular phone with a conventional camera unit (a lens driving device). Therefore, the cellular phone 101 of the present embodiment can be miniaturized (thinned). In addition, the cellular phone 101 and the camera unit 102 of the present embodiment can also obtain other effects of the lens driving device 6 of the present embodiment.

In the present embodiment, although a description has been made of a case where the lens driving device of the present invention was used for a cellular phone, the lens driving device of the present invention may be used for other imaging devices such as a digital camera and the like. The lens driving device of the present invention is applicable in particular to an imaging device in which available space is limited where a lens driving device is arranged.

As described above, the lens driving device of the present invention and the imaging device using the same can be miniaturized. For this reason, the lens driving device of the present invention and the imaging device using the same can be fully utilized in technical field of a lens driving device and imaging device.

## Claims

1. A lens driving device comprising:
a first driving means for driving a first lens group holding frame arranged movable along the optical axis, the first driving means including a first drive source and a first driving mechanism for driving the first lens group holding frame by using a drive force output from the first drive source; and
a second driving means for driving a second lens holding frame arranged movable along the optical axis, the second driving means including a second drive source and a second driving mechanism for driving the second lens group holding frame by using a drive force output from the second drive source; wherein
the first and the second driving mechanism are arranged on one side of a lens group holding frame driven range that the first and the second lens group holding frame are driven, and the first and the second driving mechanism are arranged along the optical-axis orthogonal reference-plane which is orthogonal to the optical axis on the one side, and the first and the second drive sources are respectively arranged on one side of the first and the second driving mechanism, and along the optical-axis orthogonal reference-plane, and the first and the second driving sources are facing each other with interposing the optical-axis orthogonal reference-line which is orthogonal to the optical axis on one side.

2. The lens driving device according to claim 1, wherein
the first and the second drive source each includes the main body of the drive source and drive shaft provided on the main body of both the drive sources, and the main bodies of both the drive sources are arranged facing each other with the optical-axis orthogonal reference-line interposed therebetween.

3. The lens driving device according to claim 2, wherein
the drive shafts of the first and the second drive sources are arranged parallel with each other.

4. The lens driving device according to claims 2 or 3, wherein
the main bodies of the first and the second drive sources are arranged adjacent to each other.

5. The lens driving device according to any one of claims 1 to 4, wherein
the first and the second driving mechanism each includes a lead screw arranged parallel with the optical axis on the side of the lens group holding frame driven range and a power transmission means formed of a plurality of gears, one side of which is coupled to one end side of the lead screw and
the first and the second drive sources each include a motor, and the drive shaft of each motor is arranged parallel with the optical axis at one end side of the corresponding lead screw and the other side of the power transmission means formed of a plurality of gears is coupled to the drive shaft of the motor.

6. The lens driving device according to claim 5, wherein
the plurality of gears of the first and the second driving means are arranged parallel with the optical-axis orthogonal reference-plane and diagonal to the optical-axis orthogonal reference-line.

7. The lens driving device according to claim 6, wherein
the plurality of gears of the first and the second driving means are arranged to intersect with each other.

8. The lens driving device according to any one of claims 5 to 7, wherein
the drive shafts of the motors of the first and the second driving means are arranged toward the object side and the imaging side respectively and each of the power transmission means formed of a plurality of the gears is arranged on the object side and the imaging side.

9. The lens driving device according to any one of claims 1 to 8, wherein
the input terminals of the first and the second drive sources are provided in the same direction.

10. The lens driving device according to any one of claims 1 to 9, wherein
the first and the second drive sources use the same drive source and the first and the second first driving mechanism use the same driving mechanism.

11. The lens driving device according to any one of claims 1 to 10, wherein
the first and the second driving means are configured to be attachable to one housing, and to be detachable from the first and the second lens group holding frame with the first and the second driving means attached to the housing.

12. An image device comprising the lens driving device according to any one of claims 1 to 11.
